# EUROPÄISCHE PATENTANMELDUNG

(11) **EP 0 943 858 A1**
(43) Veröffentlichungstag der Anmeldung: **22.09.1999**
(21) Anmeldenummer: 98113292.1
(22) Anmeldetag: 16.07.1998
(51) Int. Cl.: F16M 1/00, H02B 1/26

(54) **Steuergerätegehäuse**

(30) Priorität: 18.03.1998 DE 29804896 U
(71) Anmelder: ROLEC Gehäuse-Systeme Rose + Rose GmbH & Co. KG, D-31737 Rinteln/Weser (DE)
(72) Erfinder: Nussberger, Martin, 80804 München (DE)
(74) Vertreter: Seewald, Jürgen, Dipl.-Ing.

(57) **Zusammenfassung**

Die vorliegende Erfindung betrifft ein Steuergerätegehäuse mit einem Frontrahmen aus Rahmenschenkeln und Eckverbnderformteilen sowie mit einer Griffvorrichtung. Aufgabe ist es, ein derartiges Steuergerätegehäuse zur Verfügung zu stellen, welches kompakter als die bekannten aufgebaut und kostengünstiger herstellbar ist und bei dem die Griffstücke zusätzliche Funktionen erfüllen können. Gelöst wird diese Aufgabe dadurch, daß mindestens ein Rahmenschenkel (9) des Frontrahmens (3) als eine Griffleiste (4) ausgebildet ist.

## Beschreibung

Die Erfindung betrifft ein Steuergerätegehäuse mit einem Frontrahmen aus Rahmenschenkeln und Eckverbinderformteilen und mit einer Griffvorrichtung gemäß dem Oberbegriff des Anspruchs 1.

Die Gehäuse bekannter Steuergeräte sind mit zusätzlichen Griffstücken versehen, an die in einigen Fällen weiteres Zubehör anbringbar ist.

Im DE 295 11 459 U1 wird ein Steuergerät beschrieben, bei dem das Gehäuse an seiner offenen Frontseire mit einem aus Rahmenschenkeln und Eckverbindern zusammengesetzten geschlossenen Frontrahmen versehen ist. Über jeweils zwei Abstandsstücke an beiden vertikalen Seiten des Frontrahmens sind Griffstangen angebracht. An einer Griffstange ist mittels Verbindungsschellen ein mit einer Klemmleiste versehener Konzepthalter angeordnet.

Die Abstandsstücke mit den Griffstangen vergrößern die äußeren Abmessungen des Gehäuses und stellen eine Gefahrenquelle und einen zusätzlichen Kosten- und Materialaufwand dar.

Aufgabe der Erfindung ist es, ein Steuergerätegehäuse zu entwickeln, welches kompakter als die bekannten aufgebaut ist, welches kostengünstiger herstellbar ist und bei dem die Griffstücke zusätzliche Funktionen erfüllen können.

Die Lösung dieser Aufgabe ergibt sich aus den Merkmalen des Anspruchs 1. Zweckmäßige Ausgestaltungen der Erfindung sind in den Unteransprüchen angegeben.

Die Integration der Griffleisten gemäß der Erfindung in den Frontrabmen als dessen Bestandteil bringt insbesondere die folgenden Vorteile mit sich:
- Das Steuergerätegehäuse ist kompakt aufgebaut, es entsteht im wesentlichen kein zusätzlicher Raumbedarf bei der Anordnung an einer Maschine oder an eine Wand oder dgl..
- Es werden keine zusätzlichen Teile benötigt und damit Kosten eingespart.
- Der in den Griffleisten vorgesehene Kanal gewährleistet die mehrfache Nutzung der Griffleisten u.a. als Aufnahme für ein Tastaturgehäuse, zusätzliche Griffe, Zeichnungs- und Konzepthalter und dgl..
- Der Verschluß nicht benötigter öffnungen der Kanäle in den Griffleisten durch Stopfen kann farbige Akzente setzen.

Die Erfindung wird anhand eines in der Zeichnung dargestellten Ausführungsbeispiels eines Steuergerätegehäuses erläutert. Es zeigen:
- Fig. 1: eine perspektivische Draufsicht auf das Steuergerätegehäuse mit angebrachtem Tastaturgehäuse und zusätzlichem Griff,
- Fig. 2: die Seitenansicht des Steuergerätegehäuses nach Fig. 1 und
- Fig. 3: die Darstellung einer Ecke des Frontrahmens mit Zeichnungs- und Konzepthalter.

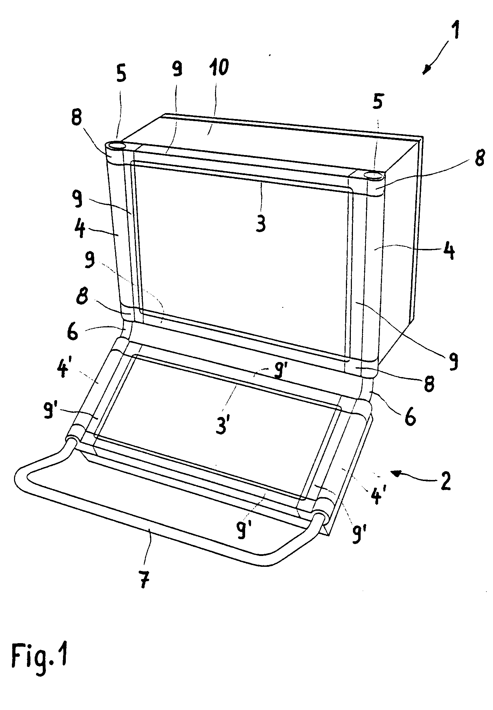

Entsprechend der Darstellung in der Fig. 1 besteht das Steuergerätegehäuse 1 aus einem Frontrahmen 3, welcher aus vier Eckverbinderformteilen 8 und aus Rahmenschenkeln 9 gebildet ist, und aus einem Unterteil 10.

Die beiden seitlichen Rahmenschenkel 9 sind als Griffleisten 4 ausgebildet, deren Kontur von den Eckverbinderformteilen 8 aufgenommen wird, so daß die Griffleisten 4 von oben bis unten durchlaufen. Diese Ausbildung vermittelt einen homogenen und ästhetischen Gesamteindruck. In den Griffleisten 4 sind in deren Längserstreckung Kanäle 5 vorgesehen. Diese Kanäle 5 können nur in den Eckverbinderformteilen 8 oder aber als Durchgangskanäle ausgebildet sein. Sie dienen dem Anbau weiterer Bauteile oder Baugruppen, was weiter unten noch näher ausgeführt wird.

Der Frontrahmen 3 ist im Ausführungsbeispiel mit dem Unterteil 10 fest verbunden. Der Frontrahmen 3 kann aber ebenso mittels Scharnieren und Schloß (nicht dargestellt) schwenkbar mit dem Unterteil 10 verbunden sein. Das Unterteil 10 kann als geschweißter Blechkörper hergestellt oder aus Profilen zusammengesetzt sein.

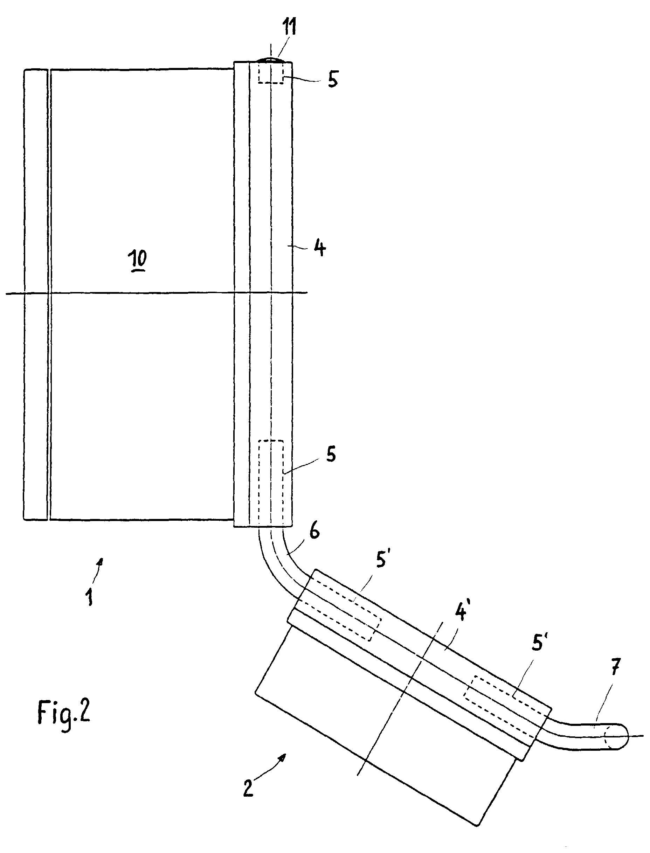

In den Fig. 1 und 2 ist gezeigt, wie der Frontrahmen 3 über die Kanäle 5 der Griffleisten 4 zur Aufnahme von unterschiedlichem Zubehör verwendet werden kann. Im vorliegenden Beispiel ist ein Tastaturgehäuse 2 angebaut. Wie aus der Darstellung gemäß Fig. 1 hervorgeht, entspricht der Frontrahmen 3' dieses Tastaturgehäuses 2 in seinem Aufbau dem Frontrahmen 3 des Steuergerätegehäuses 1, d.h. die seitlichen Rahmenschenkel 9' des Frontrahmens 3' sind ebenfalls als Griffleisten 4' mit Kanälen 5' ausgebildet. Dadurch ist ein einheitliches Design gegeben.

Der Anbau des Tastaturgehäuses 2 an das Steuergerätegehäuse 1 erfolgt mittels zweier gebogener Rohrstücke 6, deren Enden in die Kanäle 5 bzw. 5' der Griffleisten 4 bzw. 4' eingesteckt sind. Durch die gewählte Krümmung der Rohrstücke 6 kann das Tastaturgehäuse 2 in ergonomisch richtigem Winkel befestigt werden. Es ist auch ein nachträglicher Anbau an das Steuergerätegehäuse 1 möglich.

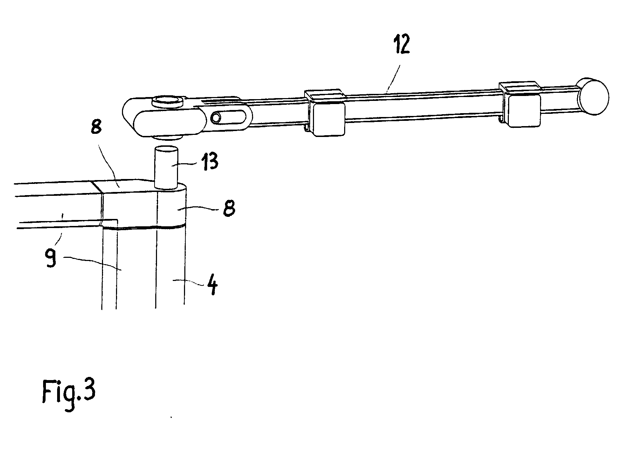

Nach den Fig. 1 und 2 ist in die unteren Kanäle 5' des Tastaturgehäuses 2 ein zusätzlicher Griff 7 aus gebogenem Rohr eingesteckt. Dieser Griff 7 kann auch direkt in die Kanäle 5 der Griffleisten 4 des Frontrahmens 3 eingesteckt werden, wenn kein Tastaturgehäuse 2 verwendet wird. Ebenso können in die oberen Kanäle 5 anderes Zubehör wie Zeichnungs- und Konzepthalter 12 schwenkbar eingebracht werden (Fig. 3).

In der Fig. 3 ist die Möglichkeit dargestellt, einen Zeichnungs- und Konzepthalter 12 über einen Stopfen 13, der nur teilweise in den Kanal 5 der Griffleiste 4 eingebracht ist und dessen eines Ende aus dem Kanal 5 herausragt, schwenkbar an den Frontrahmen 3 des Steuergerätegehäuses 1 anzubringen.

Alle Zubehöroptionen zum Frontrahmen 3 werden jeweils in dem Kanal 5 der Griffleisten 4 links und rechts am Frontrahmen 3 mittels nicht dargestellter Schneidringschrauben gehalten. Diese sind links und rechts, oben und unten, radial zur Kanalbohrung immer vorhanden.

Wenn der Kanal 5 lediglich als seitliche Griffleiste 4 benutzt wird, dann können die Bohrungen der Kanäle 5 mit Stopfen 11, die auch farbige Akzente setzen können, verschlossen werden (Fig. 2).

Die Erfindung ist nicht auf die hier beschriebenen Ausführungsformen beschränkt. Vielmehr ist es möglich, durch Kombination der Merkmale weitere Ausführungsbeispiele zu realisieren, ohne den Rahmen der Erfindung zu verlassen.

## Patentansprüche

1. Steuergerätegehäuse mit einem Frontrahmen aus Rahmenschenkeln und Eckverbinderformteilen und mit einer Griffvorrichtung,
dadurch gekennzeichnet, daß
mindestens ein Rahmenschenkel (9) des Frontrahmens (3) als eine Griffleiste (4) ausgebildet ist.

2. Steuergerätegehäuse nach Anspruch 1,
dadurch gekennzeichnet, daß
die Griffleiste (4) einen Kanal (5) aufweist, der zum Anbau von unterschiedlichem Zubehör wie Tastaturgehäuse (2), Zeichnungs- und Konzepthalter (12) verwendbar ist.

3. Steuergerätegehäuse nach den Ansprüchen 1 und 2,
dadurch gekennzeichnet, daß
beidseitig Griffleisten (4) mit jeweils einem Kanal (5) vorgesehen sind, und daß in die Kanäle (5) jeweils ein gebogenes Rohrstück (6) eingesteckt ist, über die das Tastaturgehäuse (2) in ergonomisch richtigem Winkel an das Steuergerätegehäuse (1) angebracht ist.

4. Steuergerätegehäuse nach Anspruch 3,
dadurch gekennzeichnet, daß
der Frontrahmen (3') des Tastaturgehäuses (2) ebenfalls Rahmenschenkel (9') mit integrierten Griffleisten (4') und Kanälen (5') aufweist und in die unteren Kanäle (5') ein Griff (7) aus gebogenem Rohr eingesteckt ist.

5. Steuergerätegehäuse nach den Ansprüchen 1, 2 oder 3,
dadurch gekennzeichnet, daß
in die Kanäle (5) der Griffleisten (4) ein Griff (7) eingesteckt ist.

6. Steuergerätegehäuse nach den Ansprüchen 1 bis 5,
dadurch gekennzeichnet, daß
alle in die Kanäle (5, 5') eingebrachten Elemente (6' 7) mittels Schneidringschrauben gehalten sind.

7. Steuergerätegehäuse nach einem der vorstehenden Ansprüche,
dadurch gekennzeichnet, daß
die freien Kanäle (5, 5') der Griffleisten (4, 4') mit Stopfen (11) verschließbar sind.

8. Steuergerätegehäuse nach den Ansprüchen 1 bis 7,
dadurch gekennzeichnet, daß
die Kanäle (5) in den Eckverbinderformteilen (8) ausgebildet sind.

9. Steuergerätegehäuse nach den Ansprüchen 1 bis 7,
dadurch gekennzeichnet, daß
die Kanäle (5) mittels Verrippungen im Profil als durchgehender Kanal ausgebildet sind.

10. Steuergerätegehäuse nach den Ansprüchen 1 bis 9,
dadurch gekennzeichnet, daß
der Frontrahmen (3) fest oder schwenkbar mittels Scharnieren und Schloß auf einem geschweißten Blechkörper oder auf ein aus Profilen hergestelltes Unterteil (10) aufgesetzt ist.
